# EUROPÄISCHE PATENTSCHRIFT

(11) **EP 1 482 224 B1**
(45) Veröffentlichungstag und Bekanntmachung des Hinweises auf die Patenterteilung: **19.09.2007**
(21) Anmeldenummer: 04012524.7
(22) Anmeldetag: 27.05.2004
(51) Int. Cl.: F16K 31/04, F02M 25/07

(54) **Gasdichter Ventilantrieb mit Motor- und Sicherheitsschliessfunktion**
Gas tight valve actuator with motor and safety closing function
Actionneur de soupape étanche au gaz avec un moteur et une fonction de fermeture de sécurité

(30) Priorität: 28.05.2003 DE 10325211
(43) Veröffentlichungstag der Anmeldung: 01.12.2004
(73) Patentinhaber: Saia-Burgess Dresden GmbH, 01257 Dresden (DE)
(72) Erfinder: Flemming, Dietmar, 01796 Pirna (DE); Roschke, Thomas, 01477 Arnsdorf (DE); Röthig, Frank, 01796 Pirna (DE); Hesse, Joachim, 01279 Dresden (DE)
(74) Vertreter: Grüneberg, Marcus

(56) Entgegenhaltungen:
- EP-A- 0 687 842
- EP-A- 0 982 838
- US-A- 4 381 747
- US-A- 4 742 989
- US-A- 4 895 301
- US-A- 5 606 957

## Beschreibung

Die Erfindung betrifft einen mittels Motor, insbesondere Linearschrittmotor, angetriebenen, montagesicheren und gasdichten Ventilantrieb, der eine Sicherheitsverstellung für das Schließen des Ventils bei Spannungsausfall durch eine Rückstellfeder aufweist.

Ein derartiges Ventil ist aus den Druckschriften US 5606957, US 4895301 und 4381747 bereits bekannt.

Stand der Technik sind verschiedene Ausführungen von Magnetventilen mit Rückstellfeder sowie von Motoren mit Rückstellfeder.
Nach einer in den Druckschriften US 4 782 811 A, US 4 742 989 A, US 4 501 981 A und DE 298 16 447 U1 beschriebenen Bauart besteht der für den Ventilantrieb eingesetzte Schrittmotor aus einem rotierenden Rotor mit integriertem Spindel-Mutter-System zur Umwandlung der Rotations- in eine Translationsbewegung. Als Spindel wird eine Stellstange mit Außengewinde und als Mutter eine Nabe mit Innengewinde eingesetzt. Dabei sind diese Teile so angeordnet, dass die Stellstange mit dem Ventilkegel gekoppelt ist.
Bei der Drehbewegung des Rotors gleitet die Stellstange längs der Motorachse in der Nabe.
Eine zur Gewährleistung der Funktion der Sicherheitsverstellung dienende Rückstellfeder ist mit dem Rotor gekoppelt und in Verlängerung der Nabe am axialen äußeren Ende der dem Ventilkegel gegenüber liegenden Seite des Schrittmotors angeordnet.
Mit einer derartigen Anordnung der Rückstellfeder am axialen Ende der Nabe bzw. der Stellstange sind aber eine Reihe von Nachteilen bei der Positionierung und Montage der gespannten Feder verbunden.

Die DE 3839317 A1 offenbart einen als Drehfeldmagnet ausgebildeten Elektromotorischen Antrieb für ein Stellglied mit einem zuvor beschriebenen Spindel-Mutter-System. Hierbei ist ein Rotor über eine selbsttätige Freilaufkupplung zur Ausführung einer Sicherheitsverstellung mit einer Rückstellfeder verbunden, wobei die Rückstellfeder mit der Freilaufkupplung vor dem Rotor in Richtung eines Ventilelements platziert ist. Kennzeichnend für diese Erfindung sind Rollelemente, die im Gewinde des Spindel-Mutter-Systems zwischen der Spindel und der Mutter angeordnet sind. Die Freilaufkupplung gestattet ein Nachlaufen des Antriebsmotors, wenn das Stellglied die Sicherheitsstellung eingenommen hat. Nachteilig an dieser Erfindung ist zum einen, dass auf Grund der Feder-Charakteristik der als Druckfeder bzw. gestapelten Tellerfeder ausgebildeten Rückstellfeder hohe Rückstellkräfte auf das Spindel-Mutter-System wirken. Zum anderen erfordern Druckfedern auf Grund dieser hohen Rückstellkräfte Steigungen des Spindel-Mutter-Systems von mindestens 2,0 mm, um ohne Selbsthemmung arbeiten zu können. Derartig große Steigungen sind aber sehr nachteilig in Bezug auf die Modulationsfähigkeit des Ventilantriebs.

Die Aufgabe der Erfindung besteht nunmehr darin, einen gasdichten Ventilantrieb mit Motor und Sicherheitsschließfunktion zu entwickeln, der eine zur verbesserten Modulation des Gasdurchsatzes angepasste Auflösung bzw. Steigung des Spindel-Mutter-Systems aufweist und bei dem nur geringe Rückstellkräfte auf das Spindel-Mutter-System wirken.

Eine erfindungsgemäße Lösung dieser Aufgabe ist im Patentanspruch 1 angegeben. Weiterbildungen der Erfindung sind in den zugehörigen Unteransprüchen gekennzeichnet.

Nach der Konzeption der Erfindung besteht der neue Ventilantrieb aus einem Motorteil und einem Ventilteil mit durchgehender Stellstange.
Das Motorteil des Ventilantriebs besitzt den aus dem Stand der Technik bekannten und bewährten Grundaufbau eines Schrittmotors mit Stator und Rotor, wobei über den rotierenden Rotor mit integrierten Spindel-Mutter-System die Umwandlung der Rotationsbewegung in die Translationsbewegung der Motorstellstange des Schrittmotors erfolgt.

Gegenüber dem Stand der Technik wird also kein als Drehfeldmagnet ausgebildeter Antrieb und eine Freilaufkupplung verwendet, sondern ein Direktantrieb.

Durch das Motorteil, das in seinen wesentlichen Elementen aus Stator, Statorverschlussplatte oder Halteplatte, Dichthülse, Dichtung, Rotor und Lagerring besteht, verläuft die Motorstellstange, die in den Ventilkegel des Ventilteils eingreift.

Das sich in axialer Verlängerung an das Motorteil bzw. an das Koppelelement anschließende Ventilteil umfasst die wesentlichen Bauelemente Rückstellfeder, Ventilkörper, Dichtring mit oder ohne Flansch sowie Dichtring und Ventilkegel.
Der Rotor des Motorteils greift in axialer Verlängerung der Motorstellstange am anderen Ende des Koppelelements an. Die Rückstellfeder greift über das Koppelelement an der Rotornabe an.

Dadurch, dass als Rückstellfeder eine Spiralfeder mit flacher Feder-Charakteristik vorgesehen ist, kann ein Spindel-Mutter-System mit einer geringen Steigung von z. B. 0,8 bis 1,0 mm eingesetzt werden, was gegenüber dem Stand der Technik einer Halbierung der Schrittanzahl (Schritte pro Hub) und damit Verdopplung der Auflösung entspricht. Eine hohe Auflösung ist besonders für modulierende Brenner von Gasheizgeräten und Warmwasserbereitern für den Wohnungsbau im Hinblick auf eine Energieeinsparung im Übergangsbereich gewünscht.
Das durch die Spiralfeder gelieferte Drehmoment führt zudem zu einer sicheren Betriebsweise des Ventilantriebs im Bereich ohne Selbsthemmung. Zusätzlich wirken durch die Verwendung einer Spiralfeder nur geringe Rückstellkräfte vom Ventil auf das Spindel-Mutter-System.

Das Koppelelement gewährleistet also die form- und kraftschlüssige Verbindung der Rückstellfeder mit dem Rotor. Die Rückstellfeder ist nicht wie bisher üblich im Motorteil des Ventilantriebs angeordnet, sondem schließt als erstes Bauelement des Ventilteils unmittelbar an das Koppelelement, respektive Drive-Seite des Motors, an und ist über das Koppelelement mit dem Rotor und dem sie umhausenden Ventilkörper verbunden. Die Rückstellfeder ist also im Ventilteil des Ventilantriebs vor dem Rotor angeordnet und Rückstellfeder und Rotor sind über das Koppelelement miteinander verbunden. Nach der Montage sitzt die Rückstellfeder auf der Ventilseite des Koppelelements auf, wobei das eine Federnende in das Koppelelement eingehängt ist und das andere Federnende am Ventilkörper befestigt ist.

Durch die an dem Koppelelement trennbare Anordnung des Ventilantriebs in Motorteil und Ventilteil kann die Rückstellfeder problemlos in den sie umhausenden Ventilkörper eingelegt und über das Koppelelement mit dem Rotor gekoppelt werden. Nach der auf diese Weise erfolgten Montage der Rückstellfeder und der mittels Koppelelement form- und kraftschlüssigen Verbindung zum Rotor, also Kopplung von Motorteil und Ventilteil, kann die Rückstellfeder durch Bestromen des Motors gespannt werden.

Durch die erfindungsgemäße Anordnung der Spiralfeder an der Drive-Seite des Motors wird der Abstand zwischen dem Ventilkegel und der Eingriffstelle der Spiralfeder verkürzt, womit eine geringere Klemmneigung erzielt werden kann.

Als Hauptvorteile der neuen Lösung sind zu nennen:
- eine einfache Montage des Ventilteils des Ventilantriebs, da die Feder im ungespannten Zustand in den Ventilkörper montiert wird und das anschließende Koppelelement ein problemloses Einhängen des inneren Federnendes ermöglicht. Die Vorspannung der Feder kann entweder im Montageprozess durch Drehen am Magneten des Rotors oder nach Abschluss der Montage durch Selbstaufzug mit dem eigenen Stator erfolgen,
- der Einsatz einer Spiralfeder mit flacher Feder-Charakteristik ermöglicht eine Erhöhung der Auflösung (Schritte pro Hub), da die Steigung der Spindel reduziert werden kann und
- durch die Direktankopplung der Feder am Rotor wird im Unterschied zu translatorisch wirkenden Federn, die über den Wirkungsgrad eines Gleitschraubengetriebes o. Ä. auf den Rotor zurückwirken, weniger Motormoment benötigt. Das führt zu einem Antrieb mit höherem Wirkungsgrad. Ein Einsatz von Motoren mit höherer Polzahl wird dadurch möglich, was sich ebenfalls in Richtung einer höheren Auflösung auswirkt.

Weitere Einzelheiten, Merkmale und Vorteile der Erfindung ergeben sich aus der nachfolgenden Beschreibung von drei Ausführungsformen des neuen Ventilantriebs unter Bezugnahme auf die zugehörige Zeichnung.

Es zeigen:
- Fig. 1: eine erste Ausführungsform in einer Explosionsdarstellung,
- Fig. 2: die erste Ausführungsform in einer im Querschnitt dargestellten Zusammenbau-Zeichnung,
- Fig. 3: eine zweite Ausführungsform in einer Explosionsdarstellung.

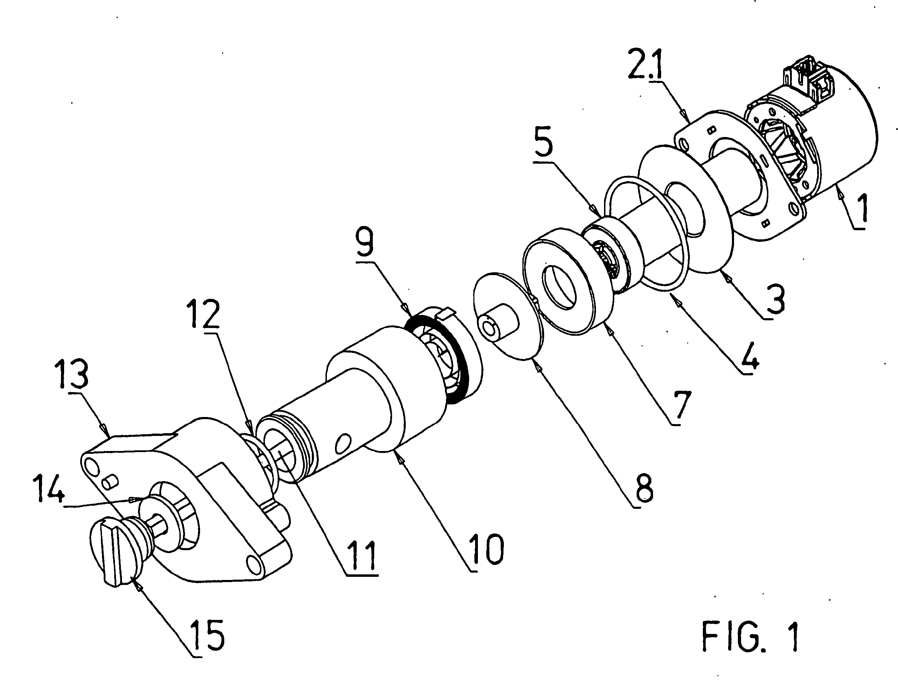

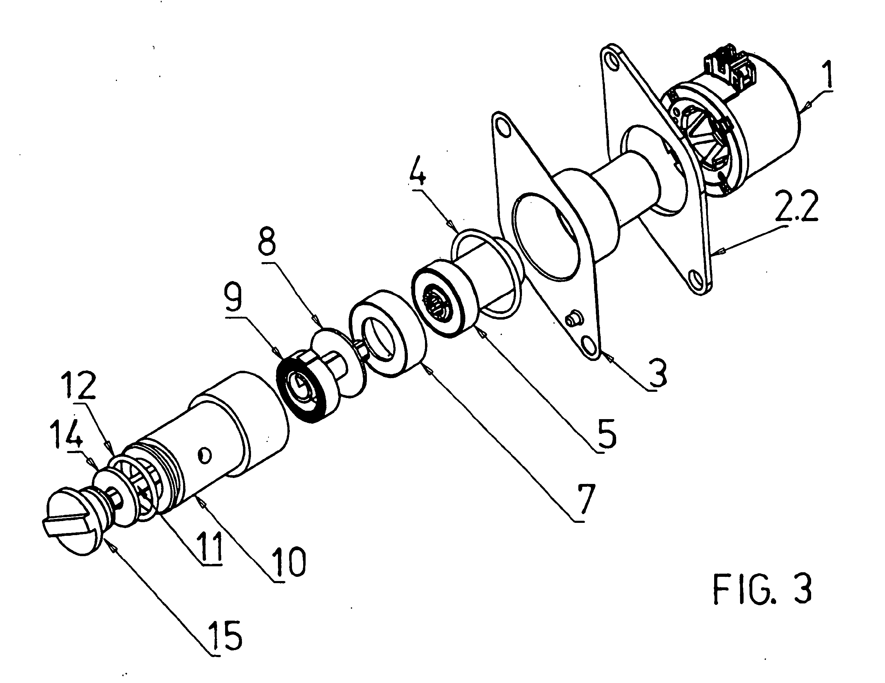

Zwei Ausführungsformen des neuen Ventilantriebs, bei dem der Rotor 5 mit einer im Ventilteil des Ventilantriebs befindlichen Rückstellfeder 9 über eine - ausgehend vom Ventilteil - vor dem Rotor angeordnetes Koppelelement 8 verbunden ist, zeigen die Fig. 1 und 3. Eine dritte Ausführungsform des erfindungsgemäßen Ventilantriebs ohne Koppelelement ist hingegen in Fig. 4 illustriert.

Bei der ersten Ausführungsform in Fig. 1 besteht der Motorteil des Ventilantriebs aus den in Montagefolge eingezeichneten Bauelementen Stator 1, Statorverschlussplatte 2.1, Dichthülse 3, Dichtring 4, Rotor 5, mit zugehöriger Motorstellstange 11 und Lagerring 7. Über das Koppelelement 8 ist dieser Motorteil mit einem aus folgenden Bauelementen bestehenden Ventilteil gekoppelt: Rückstellfeder 9, Ventilkörper 10, Dichtring 12, Flansch 13, Dichtring 14 und an die Motorstellstange 11 angeschlossenen Ventilkegel 15.

Die in Fig. 3 dargestellte zweite Ausführungsform besitzt einen ähnlichen Aufbau. Unterschiede gibt es nur bei der Ausbildung von Halteplatte 2.2 und Dichthülse 3, wodurch bei dieser Ausführungsform der in Fig. 1 benötigte Flansch 13 entfallen kann. Die Dichthülse übernimmt nicht nur die Funktion der Gasabdichtung, sondern trägt auch zur besseren Ausrichtung des relativ klemmempfindlichen Aufbaus bei.

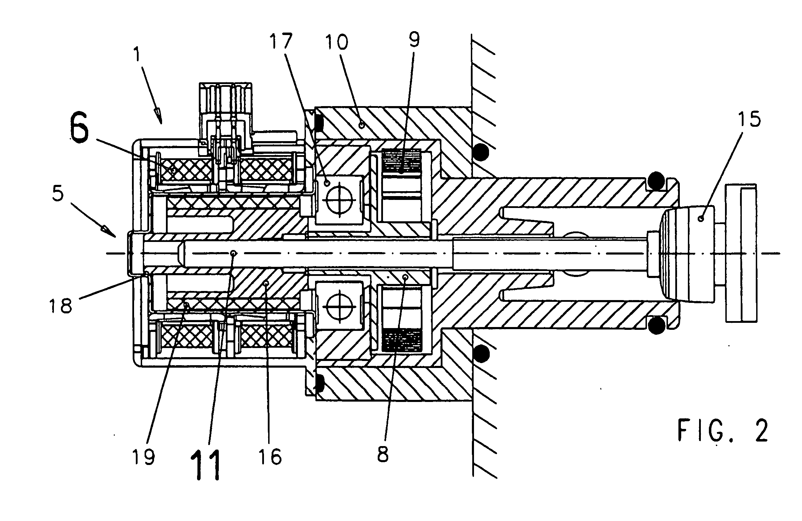

Der für die Ventilantriebe nach Fig. 1 bis 3 eingesetzte Linearschrittmotor besteht - wie aus Fig. 2 ersichtlich - u. a. aus dem Ständer 1 mit Wicklung 6 und dem Rotor 5. Der Rotor 5 besitzt eine als Nabe 16 mit Innengewinde ausgebildete Hohlwelle, die einseitig in einem Kugellager 17 gehalten und auf der anderen Seite in einem Gleitlager 18 abgestützt ist und dem auf der Nabe 16 aufsitzenden Permanentmagneten 19.
Die auf den Ventilkegel 15 arbeitende translatorische Stellbewegung wird von der in der Nabe 16 gleitenden Motorstellstange 11 mit Gewinde ausgeübt.
Die Drehrichtung des Rotors 5 bestimmt. die Bewegungsrichtung des an die Motorstellstange 11 angeschlossenen Ventilkegels 15.
Die Rückstellfeder 9 ist mit dem Rotor 5 über ein Koppelelement 8 verbunden. Als Rückstellfeder 9 kann eine Trieb- oder Spiralfeder eingesetzt werden. Die Verdrehsicherung der Stellstange 11 kann im Motor oder auch außerhalb des Motors vorgesehen werden.

### LISTE DER BEZUGSZEICHEN

- 1: Stator
- 2.1: Statorverschlussplatte
- 2.2: Halteplatte
- 3: Dichthülse
- 4: Dichtring
- 5: Rotor
- 6: Wicklung
- 7: Lagerring
- 8: Koppelelement
- 9: Rückstellfeder
- 10: Ventilkörper
- 11: Motorstellstange
- 12: Dichtring
- 13: Flansch
- 14: Dichtring
- 15: Ventilkegel
- 16: Nabe
- 17: Kugellager
- 18: Gleitlager
- 19: Permanentmagnet
- 20: Nabe
- 21: Ventilkörper
- 22: Federhaus

## Patentansprüche

1. Gasdichter Ventilantrieb mit Motor und Sicherheitsschließfunktion, wobei der für den Ventilantrieb eingesetzte Schrittmotor aus einem in einer gasdichten Hülse befindlichen Rotor (5) mit SpindelMutter-System zur Umwandlung der Rotations- in eine Translationsbewegung besteht und als Spindel eine Motorstellstange (11) mit einem Ventilkegel (15) gekoppelt ist und bei Drehbewegung des Rotors (5) durch eine integrierte Verdrehsicherung im Ventilkörper (10) die Motorstellstange (11) längs der Motorachse in der Nabe (16) gleitet sowie zur Gewährleistung der Funktion der Sicherheitsverstellung eine als Spiralfeder ausgebildete auf der Drive-Seite des Motors platzierte Rückstellfeder (9) vorhanden ist, **dadurch gekennzeichnet, dass** der als Direktantrieb ausgebildete Ventilantrieb aus einem Motorteil und einem Ventilteil mit durchgehender Motorstellstange (11) besteht, und das Motorteil und das Ventilteil mittels eines Koppelelements (8) miteinander gekoppelt sind, und dass die Rückstellfeder (9) als erstes Element des Ventilteils nach dem Koppelelement (8) nach der Montage auf der Ventilseite des Koppelelements (8) aufsitzt, wobei das eine Ende der Rückstellfeder (9) an dem sie umhausenden Ventilkörper (10) befestigt ist und das andere Ende der Rückstellfeder (9) zur Kopplung der Rückstellfeder (9) mit dem Rotor (5) in das Koppelelement (8) eingehängt ist.

2. Ventilantrieb nach Anspruch 1, **dadurch gekennzeichnet, dass** das Motorteil des Ventilantriebs in seinen wesentlichen Elementen aus Stator (1). Statorverschlussplatte (2.1) oder Halteplatte (2.2), Dichthülse (3), Dichtring (4), Rotor (5) mit Motorstellstange (11) und Lagerring (7) besteht, wobei die Motorstellstange (11) in den Ventilkegel (15) des Ventilteils und der Rotor (5) in das Koppelelement (8) eingreift.

3. Ventilantrieb nach Anspruch 1 oder 2, **dadurch gekennzeichnet, dass** das Ventilteil des Ventilantriebs in seinen wesentlichen Elementen aus Rückstellfeder (9), Ventilkörper (10), Dichtring (12) mit oder ohne Flansch (13) sowie Dichtring (14) und Ventilkegel (15) mit durchgehender Motorstellstange (11) besteht, wobei die Rückstellfeder (9) über das Koppelelement (8) in der Nabe (16) des Rotors (5) angreift.

## Claims

1. Gas-tight valve drive with motor and safety closing function, whereby the stepper motor used for the valve drive consists of a rotor (5) in a gas-tight case with a spindle/nut system for transforming the rotational movement into a translational movement and as spindle a motor actuating rod (11) is coupled to a valve cone (15), and on a rotational movement of the rotor (5) due to an anti-rotation locking device integrated into the valve body (10) the motor actuating rod (11) slides along the motor axis in the hub (16), and in order to ensure the safety shift function, a return spring (9) established as a helical spring and placed on the drive side of the motor is provided, **characterized by** that the valve drive established as direct drive consists of a motor part and a valve part with through motor actuating rod (11) and the motor part and the valve part are coupled to each other by means of a coupling member (8) and the return spring (9) as the first element of the valve part following the coupling member (8) after assembly is seated on the valve side of the coupling member (8), whereby one end of the return spring (9) is attached to the valve body (10), which envelops the return spring (9), and the other end of the return spring (9) is hooked in the coupling member (8) for coupling the return spring (9) to the rotor (5).

2. Valve drive to claim 1, **characterized by that** the motor part of the valve drive essentially comprises the stator (1), the stator closing plate (2.1) or holding plate (2.2), the seal case (3), the seal ring (4), the rotor (5) with the motor actuating rod (11) and the bearing ring (7), whereby the motor actuating rod (11) engages with the valve cone (15) of the valve part and the rotor (5) engages with the coupling member (8).

3. Valve drive to claim 1, **characterized by** that the valve part of the valve drive essentially comprises the return spring (9), the valve body (10), the seal ring (12) with or without flange (13), and the seal ring (14) and the valve cone (15) with through motor actuating rod (11), whereby the return spring (9) acts in the hub (16) of the rotor (5) via the coupling member (8).

## Revendications

1. Dispositif d'actionnement de vanne, étanche au gaz et pourvu d'un moteur ainsi que d'une fonction de fermeture de sécurité, le moteur pas à pas utilisé pour l'actionnement de la vanne consistant en un roteur (5) se trouvant dans un manchon étanche au gaz, pourvu d'une unité broche-écrou en vue de transformer le mouvement de rotation en mouvement de translation et, en guise de broche, une tringle de réglage du moteur (11) étant couplée avec un cône de vanne (15) coulissant le long de l'axe du moteur dans le moyeu (16) lors du mouvement de rotation du rotor (5) au moyen d'un dispositif anti-torsion intégré dans le corps de vanne (10), ainsi que, assurant la fonction de réglage de sécurité, un ressort de rappel (9) en forme de ressort spirale, étant positionné sur le côté actionnement du moteur, **caractérisé en ce que** le dispositif d'actionnement de vanne, à actionnement direct, consiste en une partie moteur et une partie vanne avec une tringle de réglage du moteur (11) continue et que la partie moteur et la partie vanne sont couplées l'une à l'autre par un élément de couplage (8) et que, après montage, le ressort de rappel (9) reste le premier élément positionné après l'élément de couplage (8) sur le côté vanne de l'élément de couplage, une extrémité du ressort de rappel (9) étant attachée au corps de vanne (10) qui l'enferme et l'autre extrémité du ressort de rappel (9) étant fixée à l'élément de couplage (8) afin de coupler le ressort de rappel (9) au rotor (5).

2. Dispositif d'actionnement de vanne selon la revendication 1, **caractérisé en ce que** la partie moteur du dispositif d'actionnement de vanne, dans ses éléments essentiels, consiste en un stator (1), une plaque de fermeture du stator (2.1) ou plaque de retenue (2.2), un manchon d'étanchéité (3), un anneau d'étanchéité (4), un rotor (5) avec la tringle de réglage du moteur (11) et douille de palier (7), la tringle de réglage du moteur (11) s'engrenant dans le cône de vanne (15) de la partie vanne et le rotor (5) s'engrenant dans l'élément de couplage (8).

3. Dispositif d'actionnement de vanne selon la revendication 1 ou 2, **caractérisé en ce que** la partie vanne du dispositif d'actionnement de vanne, dans ses éléments essentiels, consistent en un ressort de rappel (9), un corps de vanne (10), un anneau d'étanchéité (12) avec ou sans bride (13) ainsi qu'en un anneau d'étanchéité (14) et un cône de vanne (15) avec tringle de réglage du moteur (11) continue, le ressort de rappel (9) s'engrenant dans le moyeu (16) du rotor (5) au moyen de l'élément de couplage (8).
